# EUROPÄISCHE PATENTSCHRIFT

(11) **EP 1 227 724 B1**
(45) Veröffentlichungstag und Bekanntmachung des Hinweises auf die Patenterteilung: **14.04.2004**
(21) Anmeldenummer: 00967851.7
(22) Anmeldetag: 10.10.2000
(51) Int. Cl.: A01N 47/36

(54) **HERBIZIDE MITTEL**
HERBICIDAL AGENT
AGENTS HERBICIDES

(30) Priorität: 26.10.1999 DE 19951426
(43) Veröffentlichungstag der Anmeldung: 07.08.2002
(73) Patentinhaber: Bayer CropScience GmbH, 65929 Frankfurt/Main (DE)
(72) Erfinder: KRÄHMER, Hansjörg, 65719 Hofheim (DE); AULER, Thomas, 65812 Bad Soden (DE); ROSINGER, Christopher, 65719 Hofheim (DE); HAGEMEISTER, Heinz, 65929 Frankfurt (DE); DREXLER, David, 69370 St. Didier au Mont d Or (FR)
(86) Internationale Anmeldenummer: PCT/EP2000/009929
(87) Internationale Veröffentlichungsnummer: WO 2001/030155

(56) Entgegenhaltungen:
- EP-A- 0 313 317
- EP-A- 0 342 569
- EP-A- 0 514 769
- EP-A- 0 598 515
- WO-A-00/25586
- WO-A-00/44226
- WO-A-00/44227
- WO-A-94/24858
- WO-A-95/29899
- WO-A-98/16102
- DATABASE CHEMABS [Online] CHEMICAL ABSTRACTS SERVICE, COLUMBUS, OHIO, US; retrieved from STN-INTERNATIONAL, accession no. 128:240725 CA XP002161181 & JP 10 059809 A (DAINIPPON INK AND CHEMICALS) 3. März 1998 (1998-03-03)
- DATABASE WPI Section Ch, Week 199732 Derwent Publications Ltd., London, GB; Class A97, AN 1997-347334 XP002161182 & JP 09 143006 A (NISSAN CHEM IND LTD), 3. Juni 1997 (1997-06-03)

## Beschreibung

Die Erfindung bezieht sich auf das technische Gebiet der Pflanzenschutzmittel, insbesondere betrifft die Erfindung herbizide Mittel mit einem Gehalt an bestimmten Phenylsulfonylhamstoffen und/oder ihren Salzen und Pflanzenölen, die sich hervorragend zur Bekämpfung von Schadpflanzen in Pflanzenkulturen eignen.

Die Verwendung von Sulfonylhamstoffen als aktive Komponente von Pflanzenschutzmitteln ist bekannt (z.B. EP-A-007 687, EP-A-030 138). Ebenso ist bekannt, Sulfonylhamstoffe wie Nicosulfuron (Accent ®) mit Pflanzenölen zu kombinieren (z.B. CPR/T & OR 1999 Adjuvant Reference Supplement-C&P Press 1998, S. 55/56). In WO-A-98 16 102 wird eine Zusammensetzung, enthaltend Metsulfuron-methyl und Rizinusöl, offenbart.

Aufgabe der vorliegenden Erfindung bestand darin, herbizide Mittel bereitzustellen, welche eine besonders hohe herbizide Wirkung aufweisen, selektive Eigenschaften gegenüber landwirtschaftlichen Kulturpflanzen aufweisen und auch eine hohe Kulturpflanzenverträglichkeit aufweisen.

Es wurde nun überraschend gefunden, daß herbizide Mittel, die spezielle Sulfonylhamstoffe in Kombination mit Pflanzenölen enthalten, diese Aufgabe erfüllen.

Die vorliegende Erfindung betrifft somit herbizide Mittel, enthaltend
A) einen oder mehrere Sulfonylhamstoffe der allgemeinen Formel (I) und/oder deren Salze 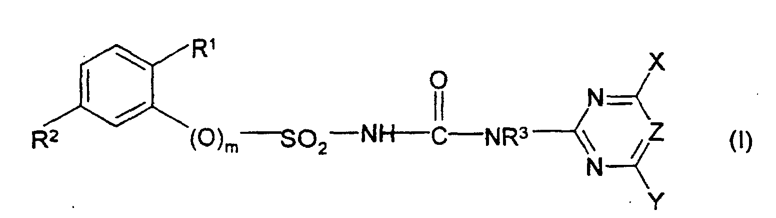 worin
   - R¹: C₂-C₄-Alkoxy oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
   - R²: Halogen oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acyl-Rest ist, und für den Fall, daß R¹ gleich C₂-C₄-Alkoxy bedeutet auch H sein kann,
   - R³: H oder C₁-C₄-Alkyl ist,
   - m: gleich Null oder 1, vorzugsweise Null ist,
   - X und Y: unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy,
   - Z: gleich CH oder N ist, und
B) eines oder mehrere Pflanzenöle.

Die Verbindungen der Formel (I) können Salze bilden, bei denen der Wasserstoff der -SO₂-NH-Gruppe durch ein für die Landwirtschaft geeignetes Kation ersetzt ist. Diese Salze sind beispielsweise Metall-, insbesondere Alkalisalze (z.B. Na- oder K-Salze) oder Erdalkalisalze, oder auch Ammoniumsalze oder Salze mit organischen Aminen. Ebenso kann Salzbildung durch Anlagerung einer starken Säure an den Heterocyclenteil der Verbindungen der Formel (I) erfolgen. Geeignet hierfür sind z. B. HCl, HNO₃, Trichloressigsäure, Essigsäure oder Palmitinsäure. Besonders vorteilhafte Verbindungen sind solche, bei denen das Salz des Herbizids der Formel (I) durch Ersatz des Wasserstoffs der -SO₂-NH-Gruppe durch ein Kation aus der Gruppe der Alkalimetalle, Erdalkalimetalle und Ammonium, bevorzugt Natrium, gebildet wird.

Sofern die Verbindungen der Formel (I) ein oder mehrere asymetrische C-Atome oder auch Doppelbindungen enthalten, die in der allgemeinen Formel nicht gesondert angegeben sind, sind diese doch von Formel (I) umfaßt. Die durch ihre spezifische Raumform definierten möglichen Stereoisomeren, wie Enantiomere, Diastereoisomere, Z- und E-Isomere sind alle von der Formel (I) umfaßt und können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden. Die genannten Stereoisomeren in reiner Form als auch ihre Gemische können somit erfindungsgemäß eingesetzt werden.

Ein Acylrest im Sinne dieser Beschreibung bedeutet den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestem, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{x}, CS-R^{x}, CO-OR^{x}, CS-OR^{x}, CS-SR^{x}, SOR^{y} oder SO₂R^{Y}, wobei R^{X} und R^{Y} jeweils einen C₁-C₁₀-Kohlenwasserstoffrest wie C₁-C₁₀-Alkyl oder C₆-C₁₀-Aryl bedeuten, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{X} und R^{Y} bedeuten Aminocarbonyl, oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.
Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren.

Im Sinne dieser Beschreibung sind die Reste Alkyl und Alkyl-haltige Reste wie Alkoxy und Alkylthio sowie die entsprechenden unsubstituierten und/oder substituierten Reste im Kohlenstoffgerüst jeweils geradkettig oder verzweigt. Wenn nicht speziell angegeben, sind bei diesen Resten die niederen Kohlenstoffgerüste, z.B. mit 1 bis 4 C-Atomen bevorzugt. Alkylreste, auch in den zusammengesetzten Bedeutungen wie Alkoxy, oder Alkylthio bedeuten, z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyle, 1-Methylhexyl und 1,4-Dimethylpentyl.

Sulfonylhamstoffe der Formel (I) und deren Salze sind zwar grundsätzlich bekannt (siehe z. B. EP-A-342 569, EP-A-574 418, EP-A-723 534 und EP-A-757 679), deren herausragende Eignung als Kombinationspartner in vorzugsweise synergistischen Mischungen mit Pflanzenölen ist dem Stand der Technik allerdings nicht entnehmbar.

Bevorzugt sind Sulfonylhamstoffe der allgemeinen Formel (I) und/oder deren Salze, worin
- m: gleich 1 ist,
- R¹: C₂-C₄-Alkoxy ist und R² gleich H ist.

Ebenfalls bevorzugt sind Sulfonylharnstoffe der allgemeinen Formel (I) und/oder deren Salze, worin
- m: gleich 0 ist, und

a) R¹ gleich CO-(C₁-C₄-Alkoxy) ist und R² gleich Halogen, vorzugsweise Jod ist, oder R² gleich CH₂-NHR^{e} ist, worin R^{e} ein Acylrest, vorzugsweise C₁-C₄-Alkyl-Sulfonyl ist, oder
b) R¹ gleich CO-N(C₁-C₄-Alkyl)₂ und R² gleich NHR^{e} ist, worin R^{e} ein Acylrest, vorzugsweise Formyl ist.

Als Beispiele für Verbindungen der Formel (I) und/oder ihre Salze seien genannt:
- A1 =: N-(4,6-Dimethoxypyrimidin-2-ylaminocarbonyl)-2-methoxycarbonyl-5-acetylamino-benzolsulfonamid
- A2 =: N-(4,6-Dimethoxypyrimidin-2-ylaminocarbonyl)-2-methoxycarbonyl-5-(N-formyl-N-methyl-aminomethyl)-benzolsulfonamid-natriumsalz
- A3 =: N-(4,6-Dimethoxypyrimidin-2-ylaminocarbonyl)-2-methoxycarbonyl-5-acetylamino)-benzolsulfonamid-natriumsalz
- A4 =: N-(4,6-Dimethoxypyrimidin-2-yl-aminocarbonyl)-2-methoxycarbonyl-5-(N-methyl-N-propionyl-amino)-benzolsulfonamid-natriumsalz
- A5 =: N-(4,6-Dimethoxypyrimidin-2-ylaminocarbonyl)-2-methoxycarbonyl-5-(N-isopropionyl-methylamino)-benzolsulfonamid-natriumsalz
- A6 =: N-(4,6-Dimethoxypyrimidin-2-ylaminocarbonyl)-2-methoxycarbonyl-5-(N-methoxycarbonyl-aminomethyl)-benzolsulfonamid-natriumsalz
- A7 =: N-(4,6-Dimethoxypyrimidin-2-ylaminocarbonyl)-2-(N,N-dimethylaminocarbonyl)-5-(N-methoxycarbonyl-amino)-benzolsulfonamidnatriumsalz
- A8 =: N-(4,6-Dimethoxypyrimidin-2-ylaminocarbonyl)-2-(N,N-dimethylaminocarbonyl)-5-(N-formyl-amino)-benzolsulfonamid (Foramsulfuron)
- A9 =: N-(4,6-Dimethoxypyrimidin-2-yl-aminocarbonyl)-2-(N,N-dimethylaminocarbonyl)-5-(N-formyl-amino)-benzolsulfonamid-natriumsalz (Foramsulfuron-Natrium)
- A10 =: N-(4,6-Dimethoxypyrimidin-2-yl-aminocarbonyl)-2-methoxycarbonyl-5-(N-methylsulfonyl-aminomethyl)-benzolsulfonamid-natriumsalz (Mesosulfuron-methyl-Natrium)
- A11 =: N-(4,6-Dimethoxypyrimidin-2-yl-aminocarbonyl)-2-methoxycarbonyl-5-(N-methylsulfonyl-aminomethyl)-benzolsulfonamid (Mesosulfuron-methyl)
- A12 =: N-(4,6-Dimethoxypyrimidin-2-yl-aminocarbonyl)-2-methoxycarbonyl-5-(N-methoxycarbonyl-aminomethyl)-benzolsulfonamid-natriumsalz
- A13 =: 1-(4,6-Dimethoxypyrimidin-2-yl)-3-(2-ethoxyphenoxysulfonyl)harnstoff (Ethoxysulfuron)
- A14 =: 1-(4,6-Dimethoxypyrimidin-2-yl)-3-(2-ethoxyphenoxysulfonyl)harnstoffnatriumsalz (Ethoxysulfuron-Natrium)
- A15 =: N-(4-methoxy-6-methyl-1,3,5-triazin-2-yl-aminocarbonyl)-2-methoxycarbonyl-5-iod-benzolsulfonamid (Iodosulfuron-methyl)
- A 16 =: N-(4-methoxy-6-methyl-1,3,5-triazin-2-yl-aminocarbonyl)-2-methoxycarbonyl-5-iod-benzolsulfonamid-natriumsalz (Iodosulfuron-methyl-Natrium)
- A 17 =: N-(4,6-Dimethoxyprimidin-2-yl-aminocarbonyl)-2-methoxycarbonyl-5-(N-methylsulfonyl-N-methyl-aminomethyl)-benzotsulfonamid
- A 18 =: N-(4,6-Dimethoxypyrimidin-2-yl-aminocarbonyl)-2-(N,N-dimethylaminocarbonyl)-5-(N-propionyl-amino)-benzolsulfonamid-natriumsalz

Unter dem Begriff Pflanzenöle im Sinne der vorliegenden Erfindung werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuren erhalten werden, wie sie z B. in Ölen aus ölliefernden Pflanzenarten enthalten sind, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Kombinationen aus den Wirkstoffen der Formel (I) und/oder ihren Salzen mit Pflanzenölen zeigen eine ausgezeichnete herbizide Wirkung und in einer bevorzugten Ausführungsform überadditive Effekte. Aufgrund der verbesserten Kontrolle der Schadpflanzen durch die erfindungsgemäßen herbiziden Mittel wird es möglich, die Aufwandmenge zu senken und/oder die Sicherheitsmarge zu erhöhen. Beides ist sowohl ökonomisch als auch ökologisch sinnvoll. Die Wahl der von den Komponenten A + B einzusetzenden Mengen und das Verhältnis der Komponenten A: B sind dabei von einer ganzen Reihe von Faktoren abhängig. In diesem Zusammenhang nicht unbedeutend sind u. a. die Art der Komponenten A und B, das Entwicklungsstadium der Unkräuter oder Ungräser, das zu bekämpfende Unkrautspektrum, Umweltfaktoren, Klimabedingungen, Bodenverhältnisse etc.

In bevorzugter Ausführungsform kennzeichnen sich erfindungsgemäße herbizide Mittel dadurch, daß sie einen synergistisch wirksamen Gehalt einer Kombination der Verbindungen der Formel (I) und/oder deren Salze (Typ-A Verbindungen) mit Pflanzenölen B) aufweisen. Dabei ist vor allem hervorzuheben, daß selbst in Kombinationen mit Aufwandmengen oder Gewichtsverhältnissen von A: B, bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist - den herbiziden Mitteln der Erfindung in der Regel eine synergistische Wirkung inhärent ist.

Der Einsatz der erfindungsgemäßen herbiziden Mittel kann im Vor- oder im Nachauflaufverfahren erfolgen, z.B. durch Spritzung. Durch den Einsatz der erfindungsgemäßen herbiziden Mittel kann der zur Unkrautbekämpfung notwendige Präparateaufwand wesentlich reduziert werden.

Die Aufwandmengen der Verbindung(en) der Formel (I) und/oder deren Salze liegen im allgemeinen zwischen 0,1 und 200 g ai/ha (ai = active ingredient, d.h. Aufwandmenge bezogen auf den aktiven Wirkstoff), bevorzugt zwischen 0,5 und 100 g ai/ha.

Die Aufwandmengen an Pflanzenölen B) liegen im allgemeinen im Bereich von 0,01-20 kg Pflanzenöl/ha, bevorzugt zwischen 0,5 und 5 kg Pflanzenöl/ha.

Die Gewichtsverhältnisse A: B der Komponenten der erfindungsgemäßen herbiziden Mittel können wie erwähnt ebenso wie deren Aufwandmengen innerhalb weiter Grenzen schwanken. Ein bevorzugter Bereich der Aufwandmengenverhältnisse, bezogen auf das Gewicht, umfaßt etwa A: B wie 1 : 1 bis 1 : 10000, vorzugsweise 1 : 10 bis etwa 1 : 5000.

Eine Förderung der Wirkintensität und der Wirkgeschwindigkeit kann außerdem zum Beispiel durch wirkungssteigemde Zusätze, wie organische Lösungsmittel und Netzmittel erzielt werden. Solche Zusätze lassen daher gegebenfalls eine weitere Verringerung der Wirkstoffdosierung zu.

Die erfindungsgemäßen herbiziden Mittel können z. B. als Mischformulierungen der beiden Komponenten A und B vorliegen, z.B. als Öl-Suspensionskonzentrate, die dann in üblicher Weise mit Wasser verdünnt zur Anwendung gebracht werden, oder bevorzugt als sogenannte Tankmischungen durch gemeinsame Verdünnung der zuvor getrennt formulierten Komponenten A und B mit Wasser hergestellt werden. Bei der Applikation werden die erfindungsgemäßen herbiziden Mittel insbesondere in wässriger Verdünnung, z.B. als wässrige Dispersionen, wässrige Suspensionen oder wässrige Emulsionen angewendet.

Wenn die Komponenten A und B getrennt formuliert werden, kommen als Formulierungsmöglichkeiten für die Wirkstoffkomponente A beispielsweise wasserlösliche Spritzpulver (WP) und wasserdispergierbare Granulate (WDG) in Frage, und die Pflanzenölkomponente B kann z.B. als emulgierbares Konzentrat (EC) formuliert werden.

Die erwähnten Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N. Y., 1973; K. Martens, "Spray Drying Handbook, 3rd Ed. 1979, G. Goodwin Ltd. London.

Zweckmäßig werden die erfindungsgemäßen herbiziden Mittel unter Verwendung von im Pflanzenschutz üblichen Hilfs- und Zusatzmitteln angewandt wie flüssige und/oder feste Trägerstoffe, Verdünnungsmittel und gegebenenfalls oberflächenaktive Stoffe wie Haft-, Netz-, Emulgier- und/oder Dispergierhilfsmittel.

Geeignete flüssige Trägerstoffe sind zum Beispiel aliphatische und aromatische Kohlenwasserstoffe, wie Toluol, Xylol, oder auch Cyclohexanon, Isophoron, Dimethylsulfoxid, Dimethylformamid oder Mineralölfraktionen.

Als feste Trägerstoffe eignen sich z. B. Mineralien wie Bentonit, Silicagel, Talkum, Kaolin, Attapulgit, Kalkstein, und pflanzliche Produkte wie Mehle.

Als oberflächenaktive Stoffe eignen sich zum Beispiel Polyethylenalkyl-phenylether, Naphthalinsulfonsäure und deren Salze, Phenolsulfonsäuren und deren Salze, Fettalkoholsulfonate sowie substituierte Benzolsulfonsäuren und deren Salze.

Die notwendigen Hilfs- und Zusatzmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldweil N. J.; H. v. Olphen Introduction to Clay Colloid Chemisty, 2nd Ed., J. Wiley & Sons, N. Y.; Marsden "Solvents Guide, 2^{nd} Ed., Interscience, N. Y. 1963; McCutcheon's "Detergents and Emulsifiers Annual", MC Publ. Corp., Ridgewood N. J.; Sisley and Wood, "Encyclopedia of Surface Active Agents", Chem. Publ. Co. Inc., N. Y. 1964; Schönfeldt, "Grenzflächenaktive Äthylenoxidaddukte", Wiss. Verlagsgesellschaft, Stuttgart 1976; Winnacker-Küchler "Chemische Technologie", Band 7, C. Hauser Verlag München, 4. Aufl. 1986.

Auf der Basis dieser Formulierungen lassen sich auch Kombinationen mit anderen agrochemischen Wirkstoffen wie Herbiziden, Insektiziden, Fungiziden, Antidots oder Safenern, Düngemitteln und/oder Wachstumsregulatoren herstellen, z. B. in Form einer Fertigformulierung oder als Tankmix.

Wenn die Komponenten A und B getrennt formuliert werden, kommen als Formulierungsmöglichkeiten für die Wirkstoffkomponente A beispielsweise wasserlösliche Spritzpulver (WP) und wasserdispergierbare Granulate (WDG) in Frage.

Spritzpulver sind in Wasser gleichmäßig dispergierbare Präparate, die neben den Wirkstoffen außer einem Verdünnungs- oder Inertstoff noch Tenside ionischer und/oder nichtionischer Art (Netzmittel, Dispergiermittel), z. B. polyoxyethylierte Alkylphenole, polyoxyethylierte Fettalkohole und Fettamine, Fettalkoholpolyglykolethersulfate, Alkansulfonate oder Alkylarylsulfonate, 2,2'-dinaphthylmethan-6,6'-disulfonsaures Natrium, dibutylnaphthalinsulfonsaures Natrium oder auch oleylmethyltaurinsaures Natrium enthalten.

Granulate können entweder durch Verdüsen des Wirkstoffes oder der Wirkstoffe auf adsorptionsfähiges, granuliertes Inertmaterial hergestellt werden oder durch Aufbringen von Wirkstoffkonzentraten mittels Klebemitteln, z. B. Zucker wie Pentosen oder Hexosen oder auch Mineralölen, auf die Oberfläche von Trägerstoffen wie Sand, Kaolinite oder von granuliertem Inertmaterial. Wasserdispergierbare Granulate werden in der Regel nach den üblichen Verfahren wie Sprühtrocknung, Wirbelbettgranulierung, Tellergranulierung, Mischung mit Hochgeschwindigkeitsmischem und Extrusion ohne festes inertmaterial hergestellt. Auch können geeignete Wirkstoffe in der für die Herstellung von Düngemittelgranulaten üblichen Weise - gewünschtenfalls in Mischung mit Düngemitteln - granuliert werden.

Als Formulierungsmöglichkeit für die Pflanzenöle B) kommen z.B. emulgierbare Konzentrate (EC) in Betracht. Emulgierbare Konzentrate werden z.B. durch Lösen oder Emulgieren des Pflanzenöls in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether,
Propylenoxid-Ethylenoxid-Kondensationsprodukte (z. B. Blockcopolymere), Alkylpolyether, Sorbitanfettsäureester, Polyoxyethylensorbitanfettsäureester oder andere Polyoxyethylensorbitanester.

Besonders vorteilhaft werden die herbiziden Mittel der vorliegenden Erfindung hergestellt, indem man die Verbindungen der Formel (I) und/oder deren Salze (Komponente A) mit einer oder mehreren Pflanzenöl-Komponenten B nach dem Tankmischverfahren mischt. Dabei wird die Komponente A, z.B. in Form einer Wirkstoffformulierung wie WP oder WDG, mit Komponente B, z.B. in Form einer Pflanzenölformulierung wie EC, und Wasser vermischt, z.B. durch Rühren. Die Zugabereihenfolge der einzelnen Komponenten ist dabei beliebig. So kann z.B. zunächst Wasser in einem Mischgefäß, z.B. dem Tank, vorgelegt werden und dazu die Komponente A und danach die Komponente B zugegeben werden. Es kann auch zunächst die Komponente B und danach die Komponente A zum Wasser gegeben werden, oder die Komponenten A und B werden gleichzeitig zum Wasser gegeben.

Die Komponenten A und B können auch gemeinsam in einer Mischformulierung vorliegen, z.B. als Öl-Suspensionskonzentrat, die in üblicher Weise mit Wasser verdünnt und appliziert wird.

Öl-Suspensionskonzentrate können beispielsweise durch Naß-Vermahlung mittels handelsüblicher Perlmühlen und gegebenenfalls Zusatz von Tensiden, wie z.B. oben bei den anderen Formulierungstypen bereits aufgeführt sind, hergestellt werden, wobei als Ölkomponente ein Pflanzenöl B) verwendet wird.

Der Anteil der Wirkstoffe in den verschiedenen Formulierungen kann in weiten Bereichen variiert werden. Beispielsweise enthalten die Formulierungen etwa 10 bis 95 Gewichtsprozent Wirkstoffe, etwa 90 bis 10 Gewichtsprozent flüssige oder feste Trägerstoffe, sowie gegebenenfalls bis zu 20 Gewichtsprozent oberflächenaktive Stoffe. In Spritzpulvern beträgt die Wirkstoffkonzentration z. B. etwa 10 bis 95 Gew.-%, der Rest zu 100 Gew.-% besteht aus üblichen Formulierungsbestandteilen. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%. Bei Öl-Suspensionskonzentraten liegt der Wirkstoffgehalt in der Regel zwischen 0,1 und 20 Gew.-%, vorzugsweise zwischen 0,5 und 10 Gew.-%.

Daneben enthalten die genannten Wirkstofformulierungen und Pflanzenölformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und den pH-Wert und die Viskosität beeinflussende Mittel.

Aufgrund der relativ geringen Aufwandmenge der erfindungsgemäßen herbiziden Mittel ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs.

Um die Verträglichkeit und/oder Selektivität der erfindungsgemäßen herbiziden Mittel gewünschtenfalls noch zu steigern kann es von Vorteil sein, diese gemeinsam in Mischung oder zeitlich - getrennt nacheinander zusammen mit Safenem oder Antidots anzuwenden.

Als Safener oder Antidots für die erfindungsgemäßen herbiziden Mittel in Frage kommende Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91108202) und PCT/EP 90102020 (WO-911078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4,881,966) und EP-A-0 492 366 und der dort zitierten Literatur.

In einer bevorzugten Ausführungsform enthalten die herbiziden Mittel der vorliegenden Erfindung daher einen zusätzlichen Gehalt an C) einer oder mehrerer Verbindungen, die als Safener oder Antidots wirken.

Besonders bevorzugte Antidots oder Safener oder Gruppen von Verbindungen die sich als Safener oder Antidots für die oben beschriebenen herbiziden Mittel der Erfindung eignen sind unter anderem:
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (Verbindung C1 -1, Mefenpyrdiethyl) und verwandte Verbindungen, wie sie in der internationalen Anmeldung WO 91/07874 (PCT/EP 90102020) beschrieben sind;
b) Derivate der Dichlorphenylpyrazoicarbonsäure, vorzugsweise Verbindungen wie 1-(2,4-Dichlorphenyl)-5-methyl-pyrazol-3-carbonsäureethylester (Verbindung C1-2), 1-(2,4-Dichlorphenyl)-5-isopropyl-pyrazol-3-carbonsäureethylester (Verbindung C1 -3), 1-(2,4-Dichlorphenyl)-5-(1,1-dimethyl-ethyl)pyrazol-3-carbonsäureethylesier (Verbindung C1-4), 1-(2,4-Dichlorphenyl)-5-phenylpyrazol-3-carbonsäureethylester (Verbindung C1-5) und verwandte Verbindungen, wie sie in EP-A-0 333 131 und EP-A-0 269 806 beschrieben sind;
c) Verbindungen vom Typ der Triazolcarbonsäuren, vorzugsweise Verbindungen wie 1-(2,4-Dichlorphenyl)-5-trichlormethyl-(1 H)-1,2,4-triazol-3-carbonsäureethylester (Verbindung C1 -6, Fenchlorazol) und verwandte Verbindungen (siehe EP-A-0 174 562 und EP-A-0 346 620);
d) Verbindungen vom Typ der Dichlorbenzyl-2-isoxazolin-3-carbonsäure, Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung C1 -7) oder 5-Phenyl-2-isoxazolin-3-carbonsäureethylester (Verbindung C1 -8) und verwandte Verbindungen wie sie in der internationalen Patentanmeldung WO 91/08202 (PCT/EP 90/01966) beschrieben sind;
e) Verbindungen vom Typ der 8-Chinolinoxyessigsäure, vorzugsweise Verbindungen wie (5-Chlor-8-chinolinoxy)-essigsäure-(1 -methyl-hex-1 - yl)-ester (C2-1), (5-Chlor-8-chinolinoxy)-essigsäure-(1,3-dimethyl-but-1-yl)-ester (C2-2), (5-Chlor-8-chinolinoxy)-essigsäure-4-allyl-oxy-butylester (C2-3), (5-Chlor-8-chinolinoxy)-essigsäure-1-allyl-oxy-prop-2-ylester (C2-4), (5-Chlor-8-chinolinoxy)-essigsäureethylester (C2-5), (5-Chlor-8-chinolinoxy)-essigsäuremethylester (C2-6), (5-Chlor-8-chinolinoxy)-essigsäureallylester (C2-7), (5-Chlor-8-chinolinoxy)-essigsäure-2-(2-propyliden-iminoxy)-1-ethylester (C2-8), (5-Chlor-8-chinolinoxy)-essigsäure-2-oxo-prop-1-ylester (C2-9) und verwandte Verbindungen wie sie in EP-A-0 086 750, EP-A-0 094 349 und EP-A-0 191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäuremethylethylester und verwandte Verbindungen wie sie in der deutschen Patentanmeldung EP-A-0 582 198 beschrieben und vorgeschlagen worden sind;
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionsäure (Mecoprop), MCPA oder 3,6-Dichior-2-methoxy-benzoesäure(ester) (Dicamba).
h) Verbindungen vom Typ der 5,5-Diphenyl-2-isoxazolin-3-carbonsäure, vorzugsweise 5,5-Diphenyl-2-isoxazolin-3-carbonsäureethylester (C3-1, Isoxadifen-ethyl).
i) Verbindungen, die als Safener z.B. für Reis bekannt sind wie Fenclorim (= 4,6-Dichlor-2-phenylpyrimidin, Pesticide Manual, 11. Auflage, 1997, S. 511-512), Dimepiperate (= Piperidin-1 -thiocarbonsäure-S-1 -methyl-1 -phenylethylester, Pesticide Manual, 11. Auflage, 1997, S. 404-405), Daimuron (= 1 -(1 -Methyl- 1-phenylethyl)-3-p-tolyl-harnstoff, Pesticide Manual, 11. Auflage, 1997, S. 330), Cumyluron (= 3-(2-Chlorphenylmethyl)-1 -(1 -methyl-1-phenyl-ethyl)- hamstoff, JP-A-60/087254), Methoxyphenon (= 3,3'-Dimethyl-4-methoxy- benzophenon, CSB (= 1-Brom-4-(chlormethylsulfonyl)-benzol, CAS-Reg. Nr. 54091-06-4).
   Die genannten Verbindungen sind außerdem zumindest teilweise in der EP-A-0 640 587 beschrieben.
j) Eine weitere wichtige Gruppe von als Safenem und Antidoten geeignete Verbindungen ist aus der WO 95107897 bekannt.

Die Safener (Antidote) der vorstehenden Gruppen a) bis j) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäßen herbiziden Mittel erheblich erweitert werden und insbesondere ist durch die Verwendung von Safenem der Einsatz von herbiziden Mitteln möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die Komponenten A und B der herbiziden Mittel gemäß der Erfindung und die erwähnten Safener können zusammen ( als fertige Formulierung oder im Tankmisch-Verfahren) oder in beliebiger Reihenfolge nacheinander ausgebracht werden. Das Gewichtsverhältnis Safener:Herbizid (Verbindung(en) der Formel (I) und/oder ihre Salze) kann innerhalb weiter Grenzen variieren und liegt vorzugsweise im Bereich von 1 : 100 bis 100 : 1, insbesondere von 1 : 100 bis 50: 1. Die jeweils optimalen Mengen an Herbizid(en) und Safener(n) sind üblicherweise vom Typ des herbiziden Mittels und/oder vom verwendeten Safener sowie von der Art des zu behandelnden Pflanzenbestandes abhängig.

Die Safener C) können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden.
Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verwendetem Herbizid innerhalb weiter Grenzen schwanken und liegen in der Regel im Bereich von 0,001 bis 1 kg, vorzugsweise 0,005 bis 0,2 kg Wirkstoff je Hektar. Besonders günstige herbizide Mittel ergeben sich im Rahmen der Erfindung, wenn Herbizide aus der Gruppe A) in Kombination mit Pflanzenölen B) und dem Safener C1-1, C2-1 und/oder C3-1 eingesetzt werden.

Gegenstand der vorliegenden Erfindung ist auch ein Verfahren zur Bekämpfung von unerwünschten Pflanzen, das dadurch gekennzeichnet ist, daß eine herbizid wirksame Menge des erfindungsgemäßen herbiziden Mittels ausgebracht wird, z.B. auf die Pflanzen, Pflanzenteile, Pflanzensamen oder die Anbaufläche.

In bevorzugter Verfahrensvariante werden die Verbindungen der Formel (I) und/oder deren Salze in Aufwandmengen von 0,1 bis 200 g ai/ha, bevorzugt von 0,5 bis 100 g ai/ha, ausgebracht. Weiterhin besonders bevorzugt ist die Ausbringung der Wirkstoffe in Form von Tankmischungen, wobei die Einzelkomponenten, z.B. in Form von Formulierungen, gemeinsam im Tank mit Wasser gemischt werden und die erhaltene Spritzbrühe ausgebracht wird. Da die Kulturpflanzenverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel mit den erfindungsgemäßen Wirkstoffkombinationen daher zur selektiven Bekämpfung unerwünschter Pflanzen eingesetzt.

Die Ausbringung der herbiziden Mittel kann in üblicher Weise erfolgen, zum Beispiel mit Wasser als Träger in Spritzbrühmengen von etwa 100 bis 1000 Liter/ha. Eine Anwendung der Mittel im sog. Low-Volume- und Ultra-Low-Volume-Verfahren (ULV) ist ebenso möglich wie ihre Applikation in Form von Granulaten und Mikrogranulaten.

Die erfindungsgemäßen herbiziden Kombinationen können vorteilhaft zur Bekämpfung von unerwünschten Pflanzen auch in transgenen Kulturen eingesetzt werden. Transgene Kulturen sind solche, in denen die Pflanzen durch genetische Manipulation gegen Herbizide oder Pestizide resistent gemacht werden. Dergestalt veränderte Kulturpflanzen lassen dann einen selektiven Einsatz zu.

Insgesamt betrifft die Erfindung damit auch die Verwendung von herbiziden Mitteln, enthaltend
A) einen oder mehrere Sulfonylhamstoffe der allgemeinen Formel (I) und/oder deren Salze 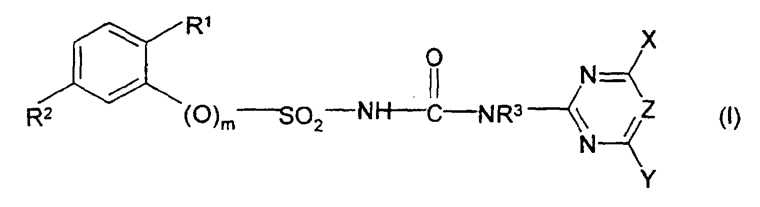 worin
   - R¹: C₂-C₄-Alkoxy oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
   - R²: Halogen oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acyl-Rest ist, und für den Fall, daß R¹ gleich C₂-C₄-Alkoxy bedeutet auch H sein kann,
   - R³: H oder C₁-C₄-Alkyl ist,
   - m: gleich Null oder 1 ist,
   - X und Y: unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy,
   - Z: gleich CH oder N ist, und
B) eines oder mehrere Pflanzenöle,
   zur Bekämpfung unerwünschter Schadpflanzen, vorzugsweise in Pflanzenkulturen.

Als Pflanzenkulturen, in denen die erfindungsgemäßen herbiziden Mittel eingesetzt werden können, seien z. B. Getreide (Weizen, Roggen, Hafer, Gerste), Mais, Reis, Hirse, Soja, Raps, Sonnenblume und Baumwolle genannt.

Eine bevorzugte Verwendung betrifft den Einsatz von herbiziden Mitteln, die Gehalte von A- und B-Komponenten in einer synergistisch wirksamen Menge aufweisen.

Zur Erfindung gehören auch Mischungen von einem oder mehreren Kombinationspartnem A), vorzugsweise A8, A9, A10, A11, A13, A15 und/oder A16 und einem oder mehreren Kombinationspartnern B), gegebenenfalls in Kombination mit einem oder mehreren Safenern C).

Als bevorzugte Beispiele für die erfindungsgemäßen herbiziden Mittel seien folgende Kombinationen von A8, A9, A10, A11, A13, A15 und A16 mit Pflanzenölen genannt, ohne daß dadurch eine Einschränkung auf die explizit genannten Kombinationen erfolgen soll:
A8 + Actirob B, A8 + Hasten, A8 + Mero, A8 + Rako-Binol,
A9 + Actirob B, A9 + Hasten, A9 + Mero, A9 + Rako-Binol,
A10 + Actirob B, A10 + Hasten, A10 + Mero, A10 + Rako-Binol,
A11 + Actirob B, A11 + Hasten, A11 + Mero, A11 + Rako-Binol,
A13 + Actirob B, A13 + Hasten, A13 + Mero, A13 + Rako-Binol,
A15 + Actirob B, A15 + Hasten, A15 + Mero, A15 + Rako-Binol,
A16 + Actirob B, A16 + Hasten, A16 + Mero, A16 + Rako-Binol,
A8 + A15 + Actirob B, A8 + A15 + Hasten, A8 + A15 + Mero, A8 + A 15 + Rako-Binol,
A9 + A15 + Actirob B, A9 + A15 + Hasten, A9 + A15 + Mero, A9 + A 15 + Rako-Binol,
A8 + A16 + Actirob B, A8 + A16 + Hasten, A8 + A16 + Mero, A8 + A 16 + Rako-Binol,
A9 + A16 + Actirob B, A9 + A16 + Hasten, A9 + A16 + Mero, A9 + A 16 + Rako-Binol.

Die vorbeschriebenen Mischungen können zweckmäßig zusammen mit einem oder mehreren Safenern eingesetzt werden. Beispiele für bevorzugte Safener sind 1-(2,4-Dichlorphenyl)-5-(ethoxycarbonyl)-5-methyl-2-pyrazolin-3-carbonsäureethylester (C1-1), (5-Chlor-8-chinolinoxy)-essigsäure-(1-methyl-hex-1-yl)-ester (C2-1)und 5,5-Diphenyl-2-isoxazolin-3-carbonsäuremethylester (C3-1).

In den aufgeführten Kombinationen kann der Einsatz eines Safeners Vorteile bieten, da hierdurch mögliche Schäden an der Kulturpflanze, die durch Sulfonylhamstoffderivate oder andere herbizid wirksame Wirkstoffe entstehen können, verringert werden können.

Ferner können die Safener C 1-1, C2-1 und C3-1 vorteilhaft durch eine oder mehrere Verbindungen der folgenden Gruppe von Safenern ersetzt oder zusammen mit einer oder mehreren der folgenden Verbindungen eingesetzt werden:
- 1-(2,4-Dichlorphenyl)-5-methyl-pyrazol-3-carbonsäureethylester (C1-2),
- 1-(2,4-Dichlorphenyl)-5-isopropyl-pyrazol-3-carbonsäureethylester (C1-3),
- 1-(2,4-Dichlorphenyl)-5-(1,1 -dimethyl-ethyl)pyrazol-3-carbonsäureethylester (C 1 -4),
- 1-(2,4-Dichlorphenyl)-5-phenyl-pyrazol-3-carbonsäureethylester (C1-5),
- 1-(2,4-Dichlorphenyl)-5-trichlormethyl-(1 H)-1,2,4-triazol-3-carbonsäureethylester (C1-6, Fenchlorazol)
- 5-(2,4-Dichlorbenzyl)-2-isoxazolin-3-carbonsäureethylester (C1-7),
- 5-Phenyl-2-isoxazolin-3-carbonsäureethylester (C1 -8),
- 5-Chlor-8-chinolinoxy)-essigsäure-(1,3-dimethyl-but-1-yl)-ester (C2-2),
- (5-Chlor-8-chinolinoxy)-essigsäure-4-allyl-oxy-butylester (C2-3),
- (5-Chlor-S-chinolinoxy)-essigsäure-1-allyl-oxy-prop-2-ylester (C2-4),
- (5-Chlor-8-chinolinoxy)-essigsäureethylester (C2-5),
- (5-Chlor-8-chinolinoxy)-essigsäuremethylester (C2-6),
- (5-Chlor-8-chinolinoxy)-essigsäureallylester (C2-7),
- (5-Chlor-8-chinolinoxy)-essigsäure-2-(2-propyliden-iminoxy)-1-ethylester (C2-8),
- (5-Chlor-8-chinolinoxy)-essigsäure-2-oxo-prop-1-ylester (C2-9),
- (5-Chlor-8-chinolinoxy)-malonsäurediethylester,
- (5-Chlor-8-chinolinoxy)-malonsäurediallyester,
- (5-Chlor-8-chinolinoxy)-malonsäuremethylethylester
- 2,4-Dichlorphenoxyessigsäure(ester) (2,4-D),
- 4-Chlor-2-methyl-phenoxy-propionester (Mecoprop),
- MCPA,
- 3,6-Dichlor-2-methoxy-benzoesäure(ester) (Dicamba).

Bevorzugte Mischungen sind :
A8 + Actirob B + C3-1, A8 + Hasten + C3-1, A8 + Mero + C3-1, A8 + Rako-Binol + C3-1,
A9 + Actirob B + C3-1, A9 + Hasten + C3-1, A9 + Mero + C3-1, A9 + Rako-Binol + C3-1,
A10 + Actirob B + C3-1, A10 + Hasten + C3-1, A10 + Mero + C3-1, A10 + Rako-Binol + C3-1,
A11 + Actirob B + C3-1, A11 + Hasten + C3-1, A11 + Mero + C3-1, A 11 + Rako-Binol + C3-1,
A13 + Actirob B + C3-1, A13 + Hasten + C3-1, A13 + Mero + C3-1, A 13 + Rako-Binol + C3-1,
A 15 + Actirob B + C3-1, A15 + Hasten + C3-1, A15 + Mero + C3-1, A 15 + Rako-Binol + C3-1,
A 16 + Actirob B + C3-1, A 16 + Hasten + C3-1, A 16 + Mero + C3-1, A 16 + Rako-Binol + C3-1,
A 8+A 15 + Actirob B + C3-1, A 8+A 15 + Hasten + C3-1, A 8+A 15 + Mero + C3-1, A 8+A 15 + Rako-Binol + C3-1,
A 8+A 16 + Actirob B + C3-1, A 8+A 16 + Hasten + C3-1, A 8+A 16 + Mero + C3-1, A 8+A 16 + Rako-Binol + C3-1,
A 9+A 15 + Actirob B + C3-1, A 9+A 15 + Hasten + C3-1, A 9+A 15 + Mero + C3-1, A 9+A 15 + Rako-Binol + C3-1,
A 9+A 16 + Actirob B + C3-1, A 9+A 16 + Hasten + C3-1, A 9+A 16 + Mero + C3-1, A 9+A 16 + Rako-Binol + C3-1.
A 8 + Actirob B + C1-1, A 8 + Hasten + C1-1, A 8 + Mero + C1-1, A 8 + Rako-Binol + C1-1,
A 9 + Actirob B + C1-1, A 9 + Hasten + C1-1, A 9 + Mero + C1-1, A 9 + Rako-Binol + C1-1,
A 10 + Actirob B + C1-1, A 10 + Hasten + C1-1, A 10 + Mero + C1-1, A 10 + Rako-Binol + C1-1,
A 11 + Actirob B + C1-1, A 11 + Hasten + C1-1, A 11 + Mero + C1-1, A 11 + Rako-Binol + C1-1,
A 13 + Actirob B + C1-1, A 13 + Hasten + C1-1, A 13 + Mero + C1-1, A 13 + Rako-Binol + C1-1,
A 15 + Actirob B + C1-1, A 15 + Hasten + C1-1, A 15 + Mero + C1-1, A 15 + Rako-Binol + C1-1,
A 16 + Actirob B + C1-1, A 16 + Hasten + C1-1, A 16 + Mero + C1-1, A 16 + Rako-Binol + C1-1,
A 8+A 15 + Actirob B + C1-1, A 8+A 15 + Hasten + C1-1, A 8+A 15 + Mero + C1-1, A 8 + A 15 + Rako-Binol + C1-1,
A 8+A 16 + Actirob B + C1-1, A 8+A 16 + Hasten + C1-1, A 8+A 16 + Mero + C1-1, A 8 + A 16 + Rako-Binol + C1-1,
A 9+A 15 + Actirob B + C1-1, A 9+A 15 + Hasten + C1-1, A 9+A 15 + Mero + C1-1, A 9 + A 15 + Rako-Binol + C1-1,
A 9+A 16 + Actirob B + C1-1, A 9+A 16 + Hasten + C1-1, A 9+A 16 + Mero + C1-1, A 9 + A 16 + Rako-Binol + C1-1.

Daneben können in den herbiziden Mitteln der Erfindung zur Abrundung der Eigenschaften, meist in untergeordneten Mengen, zusätzlich eines, zwei oder mehrere von der Komponente A verschiedene agrochemische Wirkstoffe (z.B. Herbizide, Insektizide, Fungizide usw.) enthalten sein.

Damit ergeben sich zahlreiche Möglichkeiten mehrere Wirkstoffe miteinander zu kombinieren und gemeinsam zur Bekämpfung von Schadpflanzen in Pflanzenkulturen einzusetzen, ohne vom Gedanken der Erfindung abzuweichen.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Samen oder Rhizomen, Wurzelstöcken oder anderen Dauerorganen austreiben, werden gut erfaßt. Dabei ist es gleichgültig, ob die herbiziden Mittel im Vorsaat-, Vorauflauf- oder Nachauflaufverfahren ausgebracht werden.

Die erfindungsgemäßen herbiziden Mittel können zum Beispiel zur Bekämpfung folgender Schadpflanzen verwendet werden:

Dikotyle Unkräuter der Gattungen Sinapis, Galium, Stellaria, Matricaria, Galinsoga, Chenopodium, Brassica, Urtica, Senecio, Amaranthus, Portulaca, Xanthium, Convolvulus, Ipomoea, Polygonum, Sesbania, Cirsium, Carduus, Sonchus, Solanum, Lamium, Veronica, Abutilon, Datura, Viola, Monochoria, Commelina, Sphenoclea, Aeschynomene, Heteranthera, Papaver, Euphorbia und Bidens.

Monokotyle Unkräuter der Gattungen Avena, Alopecurus, Echinochloa, Setaria, Panicum, Digitaria, Poa, Eleusine, Brachiaria, Lolium, Bromus, Cyperus, Elytrigia, Sorghum, Apera und Scirpus.

Werden die erfindungsgemäßen herbiziden Mittel vor dem Keimen appliziert, so wird entweder das Auflaufen der Unkrautkeimlinge vollständig verhindert, oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel der Erfindung auf die grünen Pflanzenteile im Nachauflaufverfahren tritt ebenfalls rasch nach der Behandlung ein drastischer Wachstumsstopp ein. Die Unkrautpflanzen bleiben in dem zum Applikationszeitpunkt vorhanden Wachstumsstadium stehen oder sterben nach einer gewissen Zeit mehr oder weniger schnell ab, so daß auf diese Weise eine für Kulturpflanzen schädliche Unkrautkonkurrenz sehr früh und nachhaltig durch den Einsatz der neuen erfindungsgemäßen Mittel verhindert werden kann und auch damit verbundene quantitative und qualitative Ertragseinbußen.

Obgleich die erfindungsgemäßen Mittel eine ausgezeichnete herbizide Aktivität gegenüber mono- und dikotylen Unkräutern aufweisen, wird die Kulturpflanze nur unwesentlich oder gar nicht geschädigt.

Zusammenfassend kann gesagt werden, daß bei gemeinsamer Anwendung von Sulfonylhamstoffen der Formel (I) und/oder ihren Salzen mit einem oder mehreren Pflanzenölen eine ausgezeichnete herbizide Wirkung erzielt wird, wobei in einer bevorzugten Ausführungsform überadditive (= synergistische) Effekte auftreten, d.h. die Wirkung in den Kombinationen ist stärker als die der eingesetzten Einzelkomponenten bei alleiniger Anwendung.

Diese Effekte erlauben unter anderem eine Reduzierung der Aufwandmenge, die Bekämpfung eines breiteren Spektrums von Unkräutern und Ungräsem, die Schließung von Wirkungslücken, auch hinsichtlich resistenter Arten, eine schnellere und sicherere Wirkung, eine längere Dauerwirkung, eine komplette Kontrolle der Schadpflanzen mit nur einer oder wenigen Applikationen, und eine Ausweitung des Anwendungszeitraumes der Wirkstoffe in Kombination.

Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen herbiziden Mittel bezüglich der beschriebenen Eigenschaften deutlich übertroffen.

Die folgenden Beispiele dienen zur Erläuterung der vorliegenden Erfindung haben allerdings keinerlei limitierenden Charakter:

### A. Biologische Beispiele

### Beispiel 1

Auf 6 m² großen Freilandparzellen wurde im Frühjahr Mais ausgesät. Nach der Aussaat liefen neben dem Mais Unkräuter der in Tabelle 1 angegebenen Arten auf. Nach 24 Tagen wurden die Parzellen mit den Wirkstoffzubereitungen in umgerechnet 400l/ha praxisüblich besprüht. Die Wirkstoffzubereitungen enthielten umgerechnet 30 g der Verbindung A8 in Kombination mit 30g des Safeners C3-1, die in Form eines wasserdispergierbaren Granulats auf der Basis von Kaolin in umgerechnet 400 l Wasser dispergiert wurden. Die Pflanzenöle wurden im Tankmischverfahren der Spritzbrühe zugemischt, in den in der Tabelle angegebenen Aufwandmengen. 2 Wochen nach der Applikation wurde die Wirkung nach folgendem Schema bonitiert:
100% = totale Vernichtung, 0% = keine Wirkung.

Die Ergebnisse sind in Tabelle 1 angegeben, wobei in Klammern die Wirkung der Herbizid / Safener-Kombination und des Pflanzenöls bei jeweils getrennter Anwendung angegeben sind. So beträgt die Schadwirkung z.B. bei Setaria viridis 42% bei alleiniger Anwendung der Herbizid/Safener Kombination A8 + C3-1 und 0% bei alleiniger Anwendung der Pflanzenöle.

**Tabelle 1**

| Pflanzenöl | Dosierung (l/ha) | SETVI | CHEAL | CHEFI | STEME |
|---|---|---|---|---|---|
| | | Wirkung (%) | Wirkung (%) | Wirkung (%) | Wirkung (%) |
| Actirob B | 1,33 | 99 (42+0) | 99 (27+0) | 99 (25+0) | 100 (10+0) |
| | 2,0 | 99 (42+0) | 99 (27+0) | 100 (25+0) | 100 (10+0) |
| Rako-Binol | 0,67 | 99 (42+0) | 91 (27+0) | 94 (25+0) | 99 (10+0) |
| | 1,0 | 99(42+0) | 96 (27+0) | 99 (25+0) | 100 (10+0) |
| Mero | 2,0 | 100 (42+0) | 98 (27+0) | 99 (25+0) | 100 (10+0) |
| Abkürzungen: | | | | | |
| SETVI = Setaria viridis | | | | | |
| CHEAL = Chenopodium album | | | | | |
| CHEFI = Chenopodium ficifolium | | | | | |
| STEME = Stellaria media | | | | | |
| l/ha = Liter/Hektar | | | | | |

Das Beispiel belegt in allen Fällen eine synergistische Wirkung der erfindungsgemäßen herbiziden Mittel.

### Beispiel 2

Auf 10 m² großen Freilandparzellen wurde im Frühjahr Mais und Sorghum sudanense ausgesät. Nach der Aussaat liefen neben den ausgesäten Spezies Unkräuter der in Tabelle 2 angegebenen Arten auf. Nach 22 Tagen wurden die Parzellen mit Wirkstoffzubereitungen in umgerechnet 300l/ha praxisüblich besprüht. Die Wirkstoffzubereitungen enthielten umgerechnet 30 g der Verbindung A8 in Kombination mit 30g des Safeners C3-1, die in Form eines wasserdispergierbaren Granulats auf der Basis von Kaolin in umgerechnet 3001 Wasser dispergiert wurden. Die Pflanzenöle wurden im Tankmischverfahren der Spritzbrühe zugemischt, in den in der Tabelle angegebenen Aufwandmengen. 12 Tage nach der Applikation wurde die Wirkung nach folgendem Schema bonitiert: 100% = totale Vernichtung , 0% = keine Wirkung.
Die Ergebnisse sind in Tabelle 2 angegeben, wobei in Klammern die Wirkung der Herbizid / Safener-Kombination und des Pflanzenöls bei jeweils getrennter Anwendung angegeben sind:

**Tabelle 2**

| Pflanzenöl | Dosierung (l/ha) | SORSU | CHEAL | ZEAMX (Mais) |
|---|---|---|---|---|
| | | Wirkung (%) | Wirkung (%) | Wirkung (%) |
| Actirob B | 1,33 | 98 (83+0) | 75 (25+0) | 0 |
| | 2,0 | 98 (83+0) | 78 (25+0) | 0 |
| Rako-Binol | 0,67 | 91 (83+0) | 55 (25+0) | 0 |
| | 1,0 | 98 (83+0) | 75 (25+0) | 0 |
| Mero | 2,0 | 100 (83+0) | 80 (25+0) | 0 |
| Abkürzungen | | | | |
| CHEAL = Chenopodium album | | | | |
| SORSU = Sorghum sudanense | | | | |
| ZEAMX = Zea mays | | | | |
| l/ha = Liter / Hektar | | | | |

Das Beispiel belegt synergistische Wirkung an den Unkräutern bei gleichzeitig hervorragender Kulturpflanzenselektivität.

### Beispiel 3

Samen beziehungsweise Rhizomstücke mono- und dikotyler Schad- und Nutzpflanzen wurden in Töpfen von 9 bis 13 cm Durchmesser in sandiger Lehmerde ausgelegt und mit Erde bedeckt. Die Töpfe wurden im Gewächshaus unter optimalen Bedingungen gehalten. Im Zwei- bis Dreiblattstadium, d.h. etwa drei Wochen nach Beginn der Aufzucht wurden die Versuchspflanzen mit den Herbiziden und Pflanzenöl in Form wäßriger Dispersion oder Suspensionen bzw. Emulsionen behandelt und mit einer Wasseraufwandmenge von umgerechnet 300 l/ha in unterschiedlichen Dosierungen auf die grünen Pflanzenteile besprüht. Die Töpfe werden zur weiteren Kultivierung der Pflanzen im Gewächshaus unter optimalen Bedingungen gehalten. Die optische Bewertung der Schäden an Nutz- und Schadpflanzen erfolgt 2-3 Wochen nach der Behandlung nach folgendem Schema: 100% = totale Vernichtung, 0% = keine Wirkung.

Die Versuchsergebnisse sind in der nachfolgenden Tabelle zusammengestellt, wobei in Klammern die Wirkung der Herbizid / Safener-Kombination und des Pflanzenöls bei jeweils getrennter Anwendung angegeben sind:

**Tabelle 3**

| Herbizid | | Pflanzenöl | | ECHCG | SORHA | CHEAL |
|---|---|---|---|---|---|---|
| Typ | Dosierung kg/ha | Typ | Dosierung l/ha | Wirkung (%) | Wirkung (%) | Wirkung (%) |
| X1 | 0,015 | Actirob B | 1 | 70 (0+0) | 60 (0+0) | 70 (0+0) |
| X1 | 0,015 | Hasten | 1 | 70 (0+0) | 60 (0+0) | 70 (0+0) |
| X1 | 0,015 | Rako-Binol | 1 | 70 (0+0) | 50 (0+0) | 75 (0+0) |
| X1 | 0,015 | Mero | 1 | 75 (0+0) | 60 (0+0) | 75 (0+0) |
| | | | | | | |
| V1 | 0,015 | Actirob B | 1 | 0 (0+0) | 0 (0+0) | 0 (0+0) |
| V1 | 0,015 | Hasten | 1 | 15 (0+0) | 0 (0+0) | 0 (0+0) |
| V1 | 0,015 | Rako-Binol | 1 | 0 (0+0) | 0 (0+0) | 0 (0+0) |
| V1 | 0,015 | Mero | 1 | 30 (0+0) | 15 (0+0) | 0 (0+0) |
| Abkürzungen: | | | | | | |
| ECHCG = Echinochloa crus galli | | | | | | |
| SORHA = Sorghum halepense | | | | | | |
| CHEAL = Chenopodium album | | | | | | |
| X1 = A8 + C3-1 | | | | | | |
| V1 = Nicosulfuron | | | | | | |
| l/ha = Liter / Hektar | | | | | | |

### Beispiel 4

Reis sowie Cyperus esculentus als typische Schadpflanze wurden im Gewächshaus unter Paddy-Reis Bedingungen (Anstauhöhe des Wassers 2-3 cm) in geschlossenen Plastiktöpfen angezogen und mit einer Wirkstoffzubereitung in einer Wasseraufwandmenge von umgerechnet 600l/ha besprüht. Anschließend wurden die Versuchspflanzen im Gewächshaus unter optimalen Wachstumsbedingungen aufgestellt und während der gesamten Versuchszeit so gehalten. Etwa 3 Wochen nach der Applikation erfolgte die Auswertung mittels optischer Bonitur der Pflanzenschäden im Vergleich zur unbehandelten Kontrolle nach folgenden Schema: 100% = totale Vernichtung, 0%= keine Wirkung.

Die Versuchsergebnisse sind in der nachfolgenden Tabelle zusammengestellt, wobei in Klammern die Wirkung der Herbizid / Safener-Kombination und des Pflanzenöls bei jeweils getrennter Anwendung angegeben sind:

**Tabelle 4**

| Herbizid | | Pflanzenöl | | Reis | CYPES |
|---|---|---|---|---|---|
| Wirkstoff | Dosierung kg/ha | Typ | Dosierung l/ha | Wirkung (%) | Wirkung (%) |
| A13 | 0,004 | Hasten | 1 | 0 (0+0) | 75 (35+0) |
| A13 | 0,004 | Hasten | 2 | 0 (0+0) | 85 (35+0) |
| Abkürzungen: | | | | | |
| CYPES = Cyperus esculentus | | | | | |
| kg/ha = Kilogramm/Hektar | | | | | |

## Patentansprüche

1. Herbizides Mittel, enthaltend
A) einen oder mehrere Sulfonylhamstoffe der allgemeinen Formel (I) und/oder deren Salze 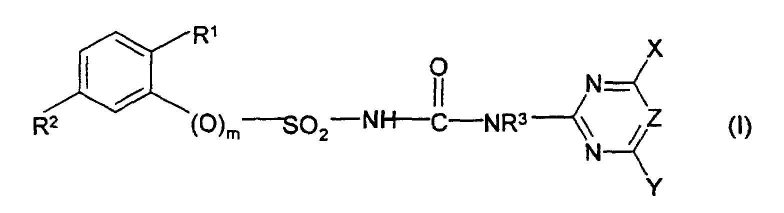 worin
R¹ C₂-C₄-Alkoxy oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
R² Halogen oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acyl-Rest ist, und für den Fall, daß R¹ gleich C₂-C₄-Alkoxy bedeutet auch H sein kann,
R³ H oder C₁-C₄-Alkyl ist,
m gleich Null oder 1 ist,
X und Y unabhängig voneinander gleich oder verschieden C₁-C₆-Alkyl, C₁-C₆-Alkoxy oder C₁-C₆-Alkylthio sind, wobei jeder der drei genannten Reste unsubstituiert oder durch einen oder mehrere Reste aus der Gruppe Halogen, C₁-C₄-Alkoxy und C₁-C₄-Alkylthio substituiert ist, oder C₃-C₆-Cycloalkyl, C₂-C₆-Alkenyl, C₂-C₆-Alkynyl, C₃-C₆-Alkenyloxy oder C₃-C₆-Alkynyloxy sind, vorzugsweise C₁-C₄-Alkyl oder C₁-C₄-Alkoxy,
Z gleich CH oder N ist, und
B) eines oder mehrere Pflanzenöle.

2. Herbizides Mittel nach Anspruch 1, enthaltend einen synergistisch wirksamen Gehalt einer Kombination der Verbindungen der Formel (I) und/oder deren Salze (Typ-A-Verbindung) mit Pflanzenölen.

3. Herbizides Mittel nach Anspruch 1 oder 2, zusätzlich enthaltend eine oder mehrere weitere Komponenten aus der Gruppe enthaltend agrochemische Wirkstoffe anderer Art, im Pflanzenschutz übliche Zusatzstoffe und Formulierungshilfsmittel.

4. Verfahren zur Bekämpfung von Schadpflanzen, worin das herbizide Mittel, definiert gemäß einem oder mehreren der Ansprüche 1 bis 3, im Vorauflauf, Nachauflauf oder im Vor- und Nachauflauf auf die Pflanzen, Pflanzenteile, Pflanzensamen oder die Anbaufläche appliziert wird.

5. Verfahren nach Anspruch 4 zur selektiven Bekämpfung von Schadpflanzen in Pflanzenkulturen.

6. Verwendung des nach einem der Ansprüche 1 bis 3 definierten herbiziden Mittels zur Bekämpfung von Schadpflanzen.

7. Verfahren zur Herstellung eines herbiziden Mittels, definiert gemäß einem oder mehreren der Ansprüche 1 bis 3, wobei die Verbindung(en) der Formel I und/oder deren Salze (Typ-A-Verbindungen) mit einem oder mehreren Pflanzenölen gemischt werden.

8. Verfahren gemäß Anspruch 7, worin die Komponente A und B im Tankmischverfahren mit Wasser gemischt werden.

## Claims

1. A herbicidal composition comprising
A) one or more sulfonylureas of the formula (I) and/or their salts 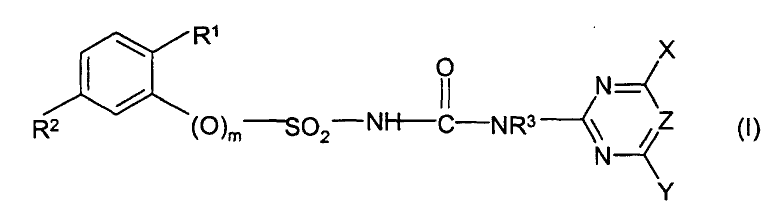 in which
R¹ is C₂-C₄-alkoxy or CO-R^{a}, where R^{a} equals OH, C₁-C₄-alkoxy or NR^{b}R^{c}, in which R^{b} and R^{c} independently of one another are identical or different and are H or C₁-C₄-alkyl,
R² is halogen or (A)ₙ-NR^{d}R^{e}, in which n equals zero or 1, A is a group CR'R", in which R' and R" independently of one another are identical or different and are H or C₁-C₄-alkyl, R^{d} equals H or C₁-C₄-alkyl and R^{e} is an acyl radical and, in the event that R¹ equals C₂-C₄-alkoxy, R^{e} may also be H,
R³ is H or C₁-C₄-alkyl,
m equals zero or 1,
X and Y independently of one another are identical or different and are C₁-C₆-alkyl, C₁-C₆-alkoxy or C₁-C₆-alkylthio, each of the three radicals mentioned being unsubstituted or substituted by one or more radicals selected from the group consisting of halogen, C₁-C₄-alkoxy and C₁-C₄-alkylthio, or are C₃-C₆-cycloalkyl, C₂-C₆-alkenyl, C₂-C₆-alkynyl, C₃-C₆-alkenyloxy or C₃-C₆-alkynyloxy, preferably C₁-C₄-alkyl or C₁-C₄-alkoxy,
Z equals CH or N, and
B) one or more vegetable oils.

2. A herbicidal composition as claimed in claim 1, comprising a synergistically active content of a combination of the compounds of the formula (I) and/or their salts (type-A compound) with vegetable oils.

3. A herbicidal composition as claimed in claim 1 or 2, additionally comprising one or more further components selected from the group consisting of agrochemical active substances of a different type, additives conventionally used in crop protection, and formulation auxiliaries.

4. A method of controlling harmful plants, wherein the herbicidal composition as defined in one or more of claims 1 to 3 is applied to the plants, parts of the plants, the seeds of the plants or the area under cultivation pre-emergence, post-emergence or pre- and post-emergence.

5. The method as claimed in claim 4 for selectively controlling harmful plants in crops.

6. The use of the herbicidal composition as defined in any of claims 1 to 3 for controlling harmful plants.

7. A process for the preparation of a herbicidal composition as defined in one or more of claims 1 to 3, wherein the compound(s) of the formula I and/or the salts thereof (type-A compounds) is or are mixed with one or more vegetable oils.

8. The process as claimed in claim 7, wherein components A and B are mixed with water by the tank mix method.

## Revendications

1. Produit herbicide, contenant
A) une ou plusieurs sulfonylurées de formule générale (I) et/ou leurs sels 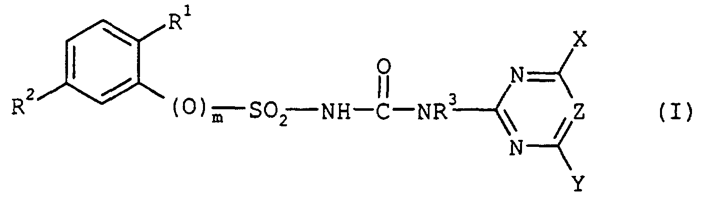 dans laquelle
R¹ est un groupe alcoxy en C₂-C₄ ou CO-R^{a}, où R^{a} est OH ou un groupe alcoxy en C₁-C₄ ou NR^{b}R^{c}, où R^{b} et R^{c} sont identiques l'un à l'autre ou différents l'un de l'autre et représentent chacun indépendamment de l'autre H ou un groupe alkyle en C₁-C₄,
R² est un atome d'halogène ou (A)ₙ-NR^{d}R^{e}, où n vaut 0 ou 1, A est un groupe CR'R" où R' et R" sont identiques l'un à l'autre ou différents l'un de l'autre et représentent chacun indépendamment de l'autre H ou un groupe alkyle en C₁-C₄, R^{d} est H ou un groupe alkyle en C₁-C₄, et R^{e} est un radical acyle et, quand R¹ est un groupe alkyle en C₂-C₄, peut aussi être H,
R³ est H ou un groupe alkyle en C₁-C₄,
m vaut 0 ou 1,
X et Y sont identiques l'un à l'autre ou différents l'un de l'autre et représentent chacun indépendamment de l'autre un groupe alkyle en C₁-C₆, alcoxy en C₁-C₆ ou alkylthio en C₁-C₆, chacun des trois radicaux mentionnés étant non substitué ou étant substitué par un ou plusieurs substituants choisis dans l'ensemble comprenant les groupes halogéno, alcoxy en C₁-C₄ et alkylthio en C₁-C₄, ou encore cycloalkyle en C₃-C₆, alcényle en C₂-C₆, alcynyle en C₂-C₆, alcényloxy en C₃-C₆ ou alcynyloxy en C₃-C₆, de préférence alkyle en C₁-C₄ ou alcoxy en C₁-C₄,
Z est CH ou N, et
B) une ou plusieurs huiles végétales.

2. Produit herbicide selon la revendication 1, qui contient une quantité à effet synergique d'une combinaison des composés de formule (I) et/ou de leurs sels (composé de type A) et d'huiles végétales.

3. Produit herbicide selon la revendication 1 ou 2, qui contient en outre un ou plusieurs autres composants choisis dans l'ensemble comprenant les matières actives agrochimiques d'un autre type, des additifs et auxiliaires de formulation usuels en protection des végétaux.

4. Procédé pour maîtriser les mauvaises herbes, dans lequel le produit herbicide défini dans l'une ou plusieurs des revendications 1 à 3 est appliqué en prélevée, en post-levée, ou encore en prélevée et en post-levée sur les plantes, les parties de plantes, les semences de plantes ou la surface cultivée.

5. Procédé selon la revendication 4 pour la maîtrise sélective des mauvaises herbes dans les cultures de végétaux.

6. Utilisation du produit herbicide selon l'une des revendications 1 à 3 pour maîtriser les mauvaises herbes.

7. Procédé de préparation d'un produit herbicide selon l'une ou plusieurs des revendications 1 à 3, dans lequel le ou les composés de formule (I) et/ou leurs sels (composés de type A) sont mélangés à une ou plusieurs huiles végétales.

8. Procédé selon la revendication 7, dans lequel les composants A et B sont mélangés à de l'eau par le procédé de mélange en cuve.
